# EUROPÄISCHE PATENTSCHRIFT

(11) **EP 0 576 977 B1**
(45) Veröffentlichungstag und Bekanntmachung des Hinweises auf die Patenterteilung: **13.03.1996**
(21) Anmeldenummer: 93109986.5
(22) Anmeldetag: 23.06.1993
(51) Int. Cl.: B01D 53/34, B01D 53/70, F27D 17/00, C21C 5/56

(54) **Verfahren zur Kühlung und Reinigung von heissen staubbeladenen und Dioxine und andere Toxine enthaltenden Rauchgasen**
Process for cooling and cleaning of hot dust, dioxine and other toxines containing flue gases
Procédé pour la réfrigération et la purification de gaz de fumée chauds contenant de la poussière, de la dioxine et d'autres toxines

(30) Priorität: 27.06.1992 DE 4221239
(43) Veröffentlichungstag der Anmeldung: 05.01.1994
(73) Patentinhaber: MAN Gutehoffnungshütte Aktiengesellschaft, D-46122 Oberhausen (DE)
(72) Erfinder: Högner, Winfried, Dipl.-Ing., D-4200 Oberhausen 1 (DE); Piechura, Hans, Dr. Dipl.-Ing., D-4630 Bochum 1 (DE)

(56) Entgegenhaltungen:
- EP-A- 0 121 858
- EP-A- 0 481 956
- DE-A- 2 511 387
- US-A- 4 450 569

## Beschreibung

Die Erfindung betrifft ein Verfahren zur Kühlung und Reinigung von heißen staubbeladenen, Dioxine und andere Toxine enthaltenden Rauchgasen aus einem Schmelzgefäß, beispielsweise einem Lichtbogenofen, Induktionsofen o. dgl., wobei eine getrennte Absaugung der Abgase in unterschiedlichen Betriebsphasen mit getrennten Filtern, eine Abgasvermischung sowie eine Abkühlung der heißen direkt abgesaugten Abgase auf 130 °C erfolgt und der Staubaustrag aus der Abgasreinigungsanlage wieder in das Schmelzgefäß eingesetzt bzw. einer anderen Nutzung zugeführt wird.

So müssen beispielsweise bei der Stahlerzeugung nach einem der bekannten Verfahren, insbesondere bei der Elektrostahlerzeugung im Lichtbogen- oder Induktionsofen, die aus dem Schmelzgefäß austretenden Rauchgase entsprechend den Bestimmungen der TLA-Luft oder anderer nationaler Verordnungen zur Reinhaltung der Luft vor dem Eintritt in die Atmosphäre gekühlt und gereinigt werden. Hier wird überwiegend eine einstufige Trockenreinigung, beispielsweise in einer Tuch-Filteranlage mit vorgeschalteter wassergekühlter Gaskühlstrecke, durchgeführt, um den Staubgehalt im gereinigten Abgas beispielsweise auf 10 mg/Nm³ Abgas abzusenken.

Beim Einsatz von Schrott in das Schmelzgefäß werden zwangsläufig Dioxine und andere Toxine enthaltende Rauchgase frei.

In den VDI-Berichten Nr. 634, 1987, S. 515 - 539, werden eine Reihe von vergleichenden Untersuchungen und Maßnahmen zur Verminderung der Dioxinemissionen an Müllverbrennungsanlagen, insbesondere für Hausmüll, beschrieben.

Danach entstehen Dioxine (PCDD) und Furane (PCDF) durch die Verbrennung von PCV sowie von PCB, Chlorphenolen und Chlorbenzolen, die beispielsweise in geringen Mengen als Dielektrika, Holzschutzmittel, Desinfektionsmittel, Konservierungsmittel etc. im Müll enthalten sind und sich an den Stäuben der Rauchgase und damit nach Abkühlung im Filterstaub wiederfinden.

Untersuchungen an Rauchgasreinigungsanlagen von Müllverbrennungsanlagen, die sowohl nach dem sog. Trockenverfahren als auch nach dem Quasitrockenverfahren arbeiten, haben Abscheidegrade für PCDD und PCDF von über 99,0 % gezeigt.

Bei dem Trockenverfahren werden 255 - 270 ° heiße Rauchgase mit Wasser auf 110 - 140 ° gequencht und in einem separaten Reaktor mit trockenem Ca(OH)₂ versetzt.

Beim Quasitrockenverfahren wird das Rauchgas mit Kalkmilch gequencht. Die Kalkmilchdosierung wird in Abhängigkeit von den Rauchgasbedingungen so geregelt, daß die Flüssigkeit total verdampft und das suspendierte Calciumhydroxid partikelförmig im Rauchgas vorliegt. Die Feststoffe werden danach bei beiden Verfahren durch Gewebefilter abgeschieden.

Die DE- 40 34 417 A1 beschreibt die Herstellung und Verwendung von hochreaktiven trockenen Reagenzien für die Abgas- und Abwasserreinigung, die beispielsweise Gemische von Kalkhydrat- bzw. Calciumhydroxid mit Zusatzstoffen enthalten, die sich durch hohe Reinigungsleistungen und Deponiesicherheit der Reaktionsprodukte auszeichnen.

Diese Reagenzien besitzen generell eine hohe Porosität und eine entsprechend große spezifische Oberfläche. Der Einsatz der Reagenzien zur Reinigung von Abgasen und Rauchgasen erfolgt überwiegend bei Naß-, Quasitrocken- und Trockenverfahren sowie direkt in dem Abgasstrom vor einem Elektrofilter einer Rauchgasreinigungsanlage.

Aus der DE- 38 27 086 A1 ist ein Verfahren und eine Vorrichtung zur thermischen Entkontaminierung von dioxin- und furanhaltigen Filterstäuben, die gleichzeitig auch Schwermetallverbindungen enthalten, und von anderen Rohstoffen bekannt.

Hier wird das zu entkontaminierende Material bei Temperaturen zwischen 1400 - 1600 °C und entsprechender Verweilzeit in einem induktiv beheizten Tiegelofen eingeschmolzen und in den flüssigen Aggregatzustand versetzt, wobei die Dioxine und Furane vernichtet und Schwermetalle in die Schmelze eingebunden werden. Das im Tiegelofen entstehende Abgas wird über eine Hochtemperaturstrecke geführt, in welcher bei hohen Temperaturen (mind. 1200 °C) und Verweilzeiten von über 2 Sek. eine vollständige Inertisierung bzw. Entkontaminierung des Abgases stattfindet.

Aus der DE-OS-25 11 387 ist darüber hinaus eine Einrichtung und Verfahren zum Absaugen und Reinigen der Abgase von metallurgischen Öfen, insbesondere von Elektroöfen bekannt, die in einer sie vollständig umgebenden, mit schalldämmenden Stoffen ausgekleideten Absauggehäuse bzw. Einhausung, angeordnet sind.

Die Absaugung der Abgase aus der Einhausung sowie aus dem vierten Deckelloch aus dem Elektroofen erfolgt über getrennte Entstaubungseinrichtungen wie Abgasleitungen, Gebläse und Filter, wobei die direkt aus dem Ofen abgesaugten Abgase über einen Zwischenkühler geleitet werden und vorteilhafterweise auf eine Temperatur von ca. 130° abgekühlt werden, so daß ein normales Textil- oder Tuchfilter für die Entstaubung verwendet werden kann.

Die Aufgabe der Erfindung besteht darin, ein Verfahren zur Kühlung und Reinigung von heißen staubbeladenen, Dioxine und andere Toxine enthaltenden Rauchgasen aus einem Schmelzgefäß zu entwickeln, und sicherzustellen, daß bei der Abkühlung der Rauchgase keine Rückbildung von Dioxinen und anderer toxischer Gase entsteht und daß die an den Staubpartikeln angelagerten Dioxine und toxischen Bestandteile einer endgültigen Zerstörung zugeführt werden.

Die verfahrensmäßige Lösung der Aufgabe ist im Patentanspruch angegeben.

Die Behandlung der aus dem Schmelzgefäß, beispielsweise einem Lichtbogenofen, austretenden Rauchgase wird in der Weise gesplittet, daß die beim Chargieren von metallischen Einsatzmaterialien in den heißen Lichtbogenofen entstehenden Rauchgase über die Absaughauben oberhalb des Lichtbogenofens erfaßt und daß die beim Einschmelzen von metallischen Einsatzmaterialien im Lichtbogenofen entstehenden Rauchgase über das sog. vierte Dachloch abgesaugt werden. Je nach Betriebserfordernis können die einzelnen Absaugstellen mittels Drosselklappen dem Filter (Schlauchfiter) zu- oder abgeschaltet werden.

Während des Chargierens und des Abstiches wird die gesamte dem Lichtbogenofen zur Verfügung stehende Absaugmenge auf die Absaughauben geschaltet. Die bei diesen Betriebsvorgängen entstehenden Rauchgase werden somit von den Dachhauben erfaßt und dem Schlauchfilter zugeführt.

Beim Chargieren des Einsatzmaterials in den heißen Lichtbogenofen entstehen durch Verbrennen von organischen Bestandteilen bereits Dioxine und andere toxische Gase. Aus diesem Grunde wird vor dem Filter ein bekanntes Additiv aus Kohle (Aktivkohle oder Herdofenkoks) und Kalziumhydroxyd in den Gasstrom eingeblasen, wodurch Dioxine und andere toxische Gase adsorbiert werden.

Das Additiv setzt sich auf den Filterschläuchen ab und adsorbiert die im Abgas enthaltenen Dioxine und sonstigen toxischen Gase.

Nach der Abreinigung der Filterschläuche ist der Staub mit Dioxinen und sonstigen toxischen Gasen kontaminiert. Damit dieser kontaminierte Staub nicht mit nicht kontaminiertem Staub vermischt wird, ist eine bestimmte Anzahl von Filterkammern oder ein separates Filter vorgesehen, in die über eine Umschaltstation nur der beim Chargieren entstehende kontaminierte Staub gelangen kann. Die Umschaltstation wird automatisch in Abhängigkeit der Stellung des Ofendeckels angesteuert.

Die am Lichtbogenofen beim Schmelzbetrieb ausströmenden heißen Rauchgase werden am Spalt zwischen Ofendeckelkrümmer und wassergekühlter Absaugleitung durch Zumischung von Umgebungsluft nachverbrannt.

Unterhalb der Ofenbühne gelangt das Rauchgas in eine fremdbeheizte Brennkammer. Die Brennkammer ist als feuerfest ausgemauerte Stahlblechkonstruktion ausgebildet, die an der Unterseite einen Staubaustrag erhält. Sie ist mit Brennern ausgerüstet, die so geregelt werden, daß die Abgastemperatur stets konstant ist. Um Dioxine und andere toxische Gase zu verbrennen, wird die Austrittstemperatur der Brennkammer beispielsweise auf eine permanente Temperatur von ca. 1.200 °C geregelt. Des weiteren ist die Brennkammer so dimensioniert, daß die Verweilzeit der Abgase in der Brennkammer größer ist als die für die Verbrennung der toxischen Schadstoffe erforderliche Reaktionszeit.

Durch die Verweilzeit der Abgase in der Brennkammer wird sichergestellt, daß die zu Beginn des Schmelzprozesses durch das Verbrennen von organischen Bestandteilen des Einsatzmateriales entstehenden Dioxine und sonstigen toxischen Gase nachverbrannt und dadurch vernichtet werden.

Die stufenweise Abkühlung der Rauchgase von ca. 1.200 °C auf eine Temperatur von zunächst etwa 600 °C erfolgt in der nachgeschalteten wassergekühlten Abgasleitung.

Um die Rückbildung von Dioxinen und sonstiger toxischer Gase sicher zu vermeiden, ist es erforderlich, das ca. 600 °C heiße Rauchgas in einer weiteren Stufe schlagartig abzukühlen. Hierzu wird dem heißen Rauchgas eine kalte Zuluftmenge aus den Absaughauben zugemischt, die aus der Ofenhalle angesaugt wird. Diese Zuluftmenge ist so bemessen, daß gleichzeitig die max. zulässige Filtereintrittstemperatur von ca. 130 °C nicht überschritten wird.

Das Schlauchfilter arbeitet im Unterdruckbetrieb. Es ist in einzelne Kammern aufgeteilt, die zu Wartungs- und Reparaturzwecken während des laufenden Betriebs aus dem Gasstrom geschaltet werden können. Darüber hinaus sind bestimmte Kammern stets für die Reinigung der Abgase, die beim Chargieren des Lichtbogenofens entstehen, vorgesehen, so daß eine Vermischung der Rauchgase, die aus den Hauben oder aus dem Schmelzgefäß abgesaugt werden, ausgeschlossen ist. Die Abreinigung der Filterschläuche erfolgt mittels Preßluft.

Wie bereits erwähnt, entstehen dioxinhaltige Rauchgase auch beim Chargieren des metallischen Einsatzmaterials in den Lichtbogenofen, die über die Absaughauben abgesaugt werden. Die Installation einer Brennkammer nach den Absaughauben ist hier grundsätzlich möglich, jedoch nicht wirtschaftlich, da die abgesaugten Volumina für eine thermische Nachbehandlung zu groß sind. Es wird deshalb auf den bereits beschriebenen Verfahrensweg verwiesen.

Der mit Dioxinen und anderen toxischen Stoffen beladene Staub aus den Filterkammern des Schlauchfilters wird auf ein separates Staubsilo gegeben und von dort auf einen Schubsender geführt. Im Schubsender bzw. im Dosiergefäß wird dieser Staub mit dem nicht kontaminierten Staub, der auf Grund der schlechten Schrottqualität mit Zink und Blei angereicht sein kann, aus dem anderen Silo gemischt und in das Bad eingeblasen. In der dem Lichtbogenofen nachgeschalteten Brennkammer werden die restlichen Dioxine und toxischen Bestandteile verbrannt, so daß der Staub anschließend in die Filterkammern, die für den nicht kontaminierten Staub vorgesehen sind, gelangen kann. Von diesen Kammern gelangt der nach wie vor mit Blei und Zink angereicherte Staub in das Staubsilo für nicht kontaminierten Staub. Wenn in diesem Silo die Zink- und Bleigehalte im Staub hoch genug sind, kann der Staub abgezogen und einer Rückgewinnungsanlage für diese Metalle zugeführt werden. Anderenfalls wird der nicht kontaminierte Staub wieder über den Lichtbogenofen im Kreislauf gefahren.

Eine Ausführungsform der Erfindung, bei dem das Schmelzgefäß ein Lichtbogenofen ist, wird anhand eines Verfahrensschemas (einzige Patentfigur) näher erläutert.

Je nach Betriebserfordernis werden die einzelnen Absaugstellen (1, 1a, 2) der Rauchgase (A, B) mittels Regel- oder Drosselklappen (18) dem ersten (6) oder zweiten Filter (7) zugeschaltet.

Während des Chargierens des heißen Lichtbogenofens (1) mit metallischen Einsatzmaterialien, während des Ablaufens der Schlacke in den Schlackenkübel (20) und während des Abstiches des Stahles in die Stahlgießpfanne (19) werden die entstehenden Rauchgase (A) von den Absaughauben (2) erfaßt und dem Schlauchfilter (6) zugeführt. Das hinter dem Filter (6, 7) angeordnete Gebläse (10) saugt die Rauchgase (A) zusammen mit einem Anteil von Kaltluft aus der Ofenhalle in die Absaughauben (2).

Auch beim Chargieren entstehen durch die sofortige Verbrennung von organischen Bestandteilen des metallischen Einsatzes Dioxine und andere toxische Gase. Aus diesem Grunde wird vor dem ersten Filter (6) ein Additiv (12) aus Kohle und Kalk in den Rauchgasstrom (A) eingeblasen. Das Additiv (12) setzt sich auf den Filterschläuchen im Filter (6) ab und adsorbiert die im Rauchgas (A) enthaltenen Giftstoffe.

Nach der Abreinigung der Filterschläuche ist der Staub (E) mit Dioxinen und sonstigen toxischen Gasen kontaminiert. Dieser kontaminierte Staub (E) wird über den Staubaustrag (8) mittels einer Zellenradschleuse (16) dem ersten Staubsilo (13) zugeführt und über eine weitere Zellenradschleuse (16) dem Schub- oder Dosierbehälter (14) zugefördert und von dort pneumatisch in den Lichtbogenofen (1) eingeblasen.

Die aus dem Lichtbogenofen (1) über das vierte Deckelloch (1a) beim Schmelzbetrieb ausströmenden heißen Rauchgase (B) werden am Spalt zwischen Ofendeckelkrümmer (1b) und wassergekühlter Absaugleitung (4) durch Zumischung von Umgebungsluft nachverbrannt.

Unterhalb der Ofenbühne gelangt das heiße Rauchgas (B) in eine fremdbeheizte Brennkammer (3). Die Brennkammer (3) ist als feuerfest ausgemauerte Stahlblechkonstruktion ausgebildet, die an der Unterseite einen Staubaustrag (3c) erhält. Sie ist mit Gasbrennern (3a) und einem Gebläse für Verbrennungsluft (3b) ausgerüstet.

Die stufenweise Abkühlung der Rauchgase (B) von ca. 1.200 °C auf eine Temperatur von zunächst etwa 600 °C erfolgt in der nachgeschalteten wassergekühlten Abgasleitung (5).

Um die Rückbildung von Dioxinen zu vermeiden, wird das ca. 600 °C heiße Rauchgas in einer weiteren Stufe schlagartig abgekühlt. Hierzu wird dem heißen Rauchgas (B) eine kalte Zuluftmenge (A), die aus der Ofenhalle abgesaugt wird und frei von Rauchgasen ist, aus den Absaughauben (2) zugemischt. Diese Zuluftmenge (A) ist so bemessen, daß das gekühlte Rauchgas (C) eine Filtereintrittstemperatur von ca. 130 °C erreicht.

Die so vorbehandelten dioxin- und furanfreien Rauchgase (C) werden dem zweiten Filter (7) zugeführt und in den Filterschläuchen gereinigt. Dieser dioxinfreie Staub (F) wird über den Staubaustrag (9) mittels einer Zellenradschleuse (16) dem zweiten Staubsilo (15) zugeführt und über eine weitere Zellenradschleuse (16) entweder in den Dosierbehälter (14) oder in einen Staubcontainer (17) gefördert.

### Bezugsziffernliste:

- 1: Schmelzgefäß (Lichtbogenofen)
- 1a: Viertes Deckelloch des Lichtbogenofens
- 1b: Deckelkrümmer des Lichtbogenofens
- 2: Absaughauben im Hallendach
- 3: Brennkammer
- 3a: Gasbrenner
- 3b: Gebläse
- 3c: Staubaustrag
- 4: Wasserkühlstrecke vor der Brennkammer
- 5: Wasserkühlstrecke nach der Brennkammer
- 6: erstes Filter (Schlauchfilter)
- 7: zweites Filter (Schlauchfilter)
- 8: Staubaustragsvorrichtung von 6
- 9: Staubaustragsvorrichtung von 7
- 10: Gebläse
- 11: Reingaskamin
- 12: Einblasen von Kohle-Kalkgemisch
- 13: Staubsilo für dioxinhaltige Stäube
- 14: Dosierbehälter / Schubgefäß
- 15: Staubsilo für dioxinfreie Stäube
- 16: Zellenradschleusen für Staubaustrag
- 17: Staubcontainer
- 18: Regelklappen
- 19: Stahlgießpfanne
- 20: Schlackenkübel
- A: Rauchgase / Kaltluft aus Absaughaube
- B: Rauchgase aus Lichtbogenofen-Deckelloch bzw. Brennkammer
- C: Rauchgase A u. B, vorgekühlt und gemischt
- D: Rauchgase A, B, C, gereinigt
- E: Dioxinhaltiger Staub
- F: Dioxinfreier Staub

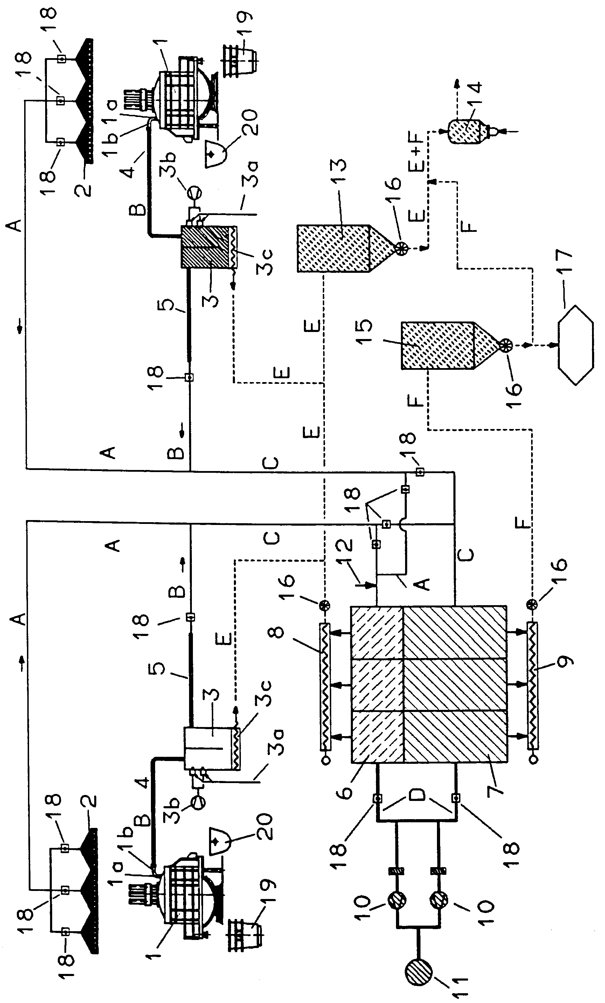

## Patentansprüche

1. Verfahren zur Kühlung und Reinigung von heißen staubbeladenen, Dioxine und andere Toxine enthaltenden Rauchgasen aus einem Schmelzgefäß, beispielsweise einem Lichtbogenofen, Induktionsofen o. dgl., wobei eine getrennte Absaugung der Abgase in unterschiedlichen Betriebsphasen mit getrennten Filtern, eine Abgasvermischung sowie eine Abkühlung der heißen direkt abgesaugten Abgase auf 130 °C erfolgt und der Staubaustrag aus der Abgasreinigungsanlage wieder in das Schmelzgefäß eingesetzt bzw. einer anderen Nutzung zugeführt wird,
gekennzeichnet durch
die Splittung der Behandlung der beim Chargieren und der beim Einschmelzen entstehenden Rauchgase in der Weise,
- daß die beim Chargieren von metallischen Einsatzmaterialen in das heiße Schmelzgefäß (1) entstehenden heißen staubbeladenen und toxischen Rauchgase (A) oberhalb des Schmelzgefäßes (1) durch Absaughauben (2) gesammelt, über eine Rauchgasleitung (A) einem ersten Staubfilter (6) zugeführt werden, daß dann ein Kohle-Kalkgemisch in die Rauchgasleitung (C) vor den Filterkammern geblasen wird, daß der mit Toxinen behaftete Staubaustrag (8) des ersten Staubfilters (6) einem ersten Staubsilo (13) zugeführt wird und von dort mittels eines Dosierbehälters (14) pneumatisch dem Schmelzgefäß (1) zum erneuten Einschmelzen zugeführt wird,
- daß die beim Einschmelzen von metallischen Einsatzmaterialien im Schmelzgefäß (1) entstehenden heißen staubbeladenen und toxischen Rauchgase (B) direkt über eine wassergekühlte Absaugleitung (4) einer mit Fremdenergie beheizten Brennkammer (3) zugeführt werden, daß die verbrannten und von Toxinen befreiten heißen Rauchgase (B) einer weiteren wassergekühlten Kühlstrecke (5) zugeleitet werden, daß diese vorgekühlten Rauchgase (B) nach Beimischung weiterer toxinfreier Kaltluft (A) als gekühltes Rauchgas (C) einem zweiten Staubfilter (7) zur Reinigung zugeführt werden, daß der Staubaustrag des zweiten Staubfilters (7) einem zweiten Staubsilo (15) zugeführt wird und von dort entweder dem toxischen Staub aus dem ersten Staubsilo (13) beigemengt und mittels eines Dosierbehälters (14) nochmals in das Schmelzgefäß (1) zum Einschmelzen gegeben wird oder bei entsprechender Konzentration einem Staubcontainer (17) zur Rückgewinnung für Schwermetalle zugeführt wird, und daß der aus der Brennkammer (3) ausgetragene Staub dem ersten Staubsilo (13) für den toxinhaltigen Staub zugeführt wird.

## Claims

1. Process for cooling and cleaning hot smoke gases loaded with dust, dioxins and other toxins, coming from a melting crucible, for example an arc furnace, induction furnace or the like, wherein the exhaust gases are drawn off separately in different operating phases with separate filters, the exhaust gases are mixed and the hot exhaust gases which have been directly drawn off are cooled to 130°C, and the dust which is discharged from the exhaust cleaning system is used again in the melting crucible or is put to another use, characterised in that the separation of the treatment of the smoke gases which result from the charging and those which result from the melting is performed in such a manner
- that the hot toxic smoke gases (A) which are loaded with dust and which are produced during the charging of metal materials into the hot melting crucible (1) are collected above the melting crucible (1) by extractor hoods (2) and conducted to a first dust filter (6) via a smoke gas conduit (A); in that subsequently, a carbon/lime mixture is blown into the smoke gas conduit (C) in front of the filter chambers; in that the dust (8) which has been discharged from the first dust filter (6) and to which toxins adhere, is conducted to a first dust silo (13) and, from there, is conducted pneumatically, by means of a dosing container (14), to the melting crucible (1) for renewed melting; in that the toxic hot smoke gases (B) which are produced from the melting of metal materials in a melting crucible (1) and which are loaded with dust, are conducted directly via a water cooled extractor conduit (4) to a combustion chamber (3) which is heated with energy from a bulk supply; in that the hot smoke gases (B) which have burnt and from which the toxins have been removed are conducted to a further water-cooled cooling stretch (5); in that these pre-cooled smoke gases (B) are conducted, after the addition of further toxin-free cold air (A), conducted, in the form of cooled smoke gas (6) to a second dust filter (7) for cleaning; in that the dust discharged from the second dust filter (7) is conducted to a second dust silo (15) and from there is either mixed with the toxic dust from the first dust silo (13) and, by means of a dosing container (14), returned into the melting crucible (1) for melting, or, in the case of an appropriate concentration, conducted to a dust container (17) for recovery of heavy metals; and in that the dust which is discharged from the combustion chamber (3) is conducted to the first dust silo (13) for the dust containing toxins.

## Revendications

1. Procédé de refroidissement et d'épuration de fumées chaudes, chargées de poussière, de dioxine et d'autres toxines, provenant de récipients de fusion par exemple d'un four à arc, d'un four à induction ou analogue, les gaz étant aspirés au cours de phases de fonctionnement différentes avec des filtres distincts, suivies d'un mélange des gaz et d'un refroidissement des gaz chauds directement aspirés jusqu'à 130°C, puis évacuation de la poussière de l'installation de nettoyage de gaz d'échappement, pour être remis dans la cuve de fusion ou être utilisés autrement, caractérisé par la division du traitement des fumées émises par le chargement et le début de fusion, de sorte que :
- les fumées (A), toxiques et chargées de poussière, chaudes, dégagées lors du chargement de matériau de remplissage métallique dans la cuve de fusion chaude (1), sont recueillies au dessus du récipient de fusion (1) par des hottes aspirantes (2), pour être transférées par une conduite de fumées (4) à un premier filtre à poussières (6), puis un mélange charbon-chaux est soufflé dans la conduite de fumées (5) en amont des chambres à filtre, l'évacuation des poussières (8) chargées de matières toxiques provenant du premier filtre à poussière (6) est assurée vers un premier silo à poussières (13) et de là les poussières sont transférées par l'intermédiaire d'un récipient de dosage (14), par voie pneumatique, à la cuve de fusion (1) pour être de nouveau fondues,
- et lors de la fusion de matières métalliques dans le récipient de fusion (1), les fumées (B) toxiques et chargées de poussière, émises directement, sont fournies à travers une conduite d'aspiration (4) refroidie par de l'eau, à une chambre de combustion (3) à chauffage par de l'énergie extérieure, les fumées (B) chaudes, brûlées et libérées des matières toxiques, étant fournies à un autre chemin de refroidissement (5), refroidi par de l'eau, et les fumées (B) prérefroidies, après mélange de l'air frais (A) sans matières toxiques, sont fournies comme fumées (C), refroidies, à un second filtre à poussières (7) pour poursuivre l'épuration, et l'évacuation des poussières du second filtre à poussières (7) se fait à l'aide d'un second silo à poussière (15) et de là soit les poussières toxiques sont mélangées à partir du premier silo à poussières (13) ou à l'aide d'un réservoir de dosage (14), pour être de nouveau introduites dans le récipient de fusion, soit, pour une concentration appropriée, un conteneur à poussières (17) reçoit le produit pour récupérer les mélanges lourds, et les poussières émises par la chambre de combustion (3), provenant du premier silo à poussières (13), sont fournis aux poussières contenant des matières toxiques.
